# EUROPÄISCHE PATENTSCHRIFT

(11) **EP 1 013 533 B1**
(45) Veröffentlichungstag und Bekanntmachung des Hinweises auf die Patenterteilung: **14.07.2004**
(21) Anmeldenummer: 99124697.6
(22) Anmeldetag: 11.12.1999
(51) Int. Cl.: B61L 15/00, B60L 15/32, B60T 13/66

(54) **Verfahren zum Bestimmen der physischen Reihenfolge von Fahrzeugen eines zusammengestellten Zuges und Anordnung zur Durchführung des Verfahrens**
Method for determining the physical order of vehicles of a train composition and device for carrying out this method
Procédé pour déterminer l' ordre physique de véhicules d'une composition de train et dispositif pour la mise en oeuvre de ce procédé

(30) Priorität: 19.12.1998 DE 19858922
(43) Veröffentlichungstag der Anmeldung: 28.06.2000
(73) Patentinhaber: DB Cargo AG, 55116 Mainz (DE)
(72) Erfinder: Gräber, Johannes, 32423 Minden (DE)
(74) Vertreter: Zinken-Sommer, Rainer

(56) Entgegenhaltungen:
- US-A- 4 582 280

## Beschreibung

Die Erfindung betrifft ein Verfahren zum Bestimmen der physischen Reihenfolge von Fahrzeugen eines zusammengestellten Zuges (Zugtaufe) , wobei von fahrzeugfesten Funkeinrichtungen Informationen in ein zuggebundenes funkbasiertes Datenkommunikationssystem gesendet werden, und eine Anordnung zur Durchführung des Verfahrens.

Verfahren der gattungsgemäßen Art sind aus ZEV + DET Glas. Min. 119 (1995) Nr. 11/12 "Elektrische/elektronische Brems-Abfrage und Steuerung für Güterzüge", Seiten 505 ff. bekannt. Mittels eines derartigen, auch als Zugtaufe bezeichneten Verfahrens wird ein Initialisierungsprozeß eines Datenkommunikationssystems des Zuges nach einer Neuzusammenstellung eines Zuges oder nach einer Änderung der Zugzusammensetzung durchgeführt. Hierbei wird auf Anforderung einer eine Masterfunktion ausübenden Zentraleinheit, die die Steuerung des Zuges übernehmen soll, eine Abfrage von jedem einzelnen, dem Zug zugeordneten Fahrzeug eingeholt, um die Anzahl der Fahrzeuge, eine Fahrzeugreihung sowie eine Rechts/Links-Orientierung der Fahrzeuge innerhalb des Zuges automatisch zu ermitteln. Zur Durchführung eines derartigen Verfahrens ist bekannt, jedes Fahrzeug des Zuges an einen Zugbus zu koppeln, über den der Datenaustausch erfolgt. Als Zugbus können beispielsweise physikalische Leitungen oder ein Funkbus eingesetzt werden. Ein Funkbus bietet den Vorteil, daß eine Kopplung einer elektronischen/elektrischen Verbindungsleitung zum Aufbau des Zugbusses zwischen den einzelnen Fahrzeugen nicht erfolgen muß, da die Datenübertragung auf Funkwege, das heißt leitungslos, erfolgt. Hierbei ist jedoch nachteilig, insbesondere wenn bei mehreren, räumlich eng benachbart stehenden Zügen eine Zugtaufe durchgeführt werden soll, daß eine nicht eindeutige Zuordnung der Fahrzeuge zu dem jeweils zugehörigen Zug möglich ist. Durch die Funkübertragung kann versehentlich eine logische Zuordnung eines in einem benachbart stehenden Zug angeordneten Fahrzeuges zu einem "falschen" Zug erfolgen.

Aus der DE 27 26 930 C3 ist eine Anordnung zum Übertragen einer Information über eine aus mehreren Zuggliedern eines Eisenbahnzuges bestehende Strecke bekannt, bei der als Übertragungsmedium die Druckluft einer vorhandenen Druckluftleitung verwendet wird. Mittels einer derartigen Anordnung wird eine laufende Betriebszustandsüberwachung durchgeführt, um eventuell auftretende Defekte frühzeitig erkennen zu können.

Bekannt ist ein Kommunikationssystem für schienengestützte Fahrzeuge, wobei der Kommunikationsaufbau zwischen den Fahrzeugen einschließlich des Austausches eines Identifikationssignals per Funk erfolgt (US 4.582.280). Die Überprüfung der physikalischen Zugehörigkeit zum Zugverband wird lediglich über einen nicht näher beschriebenen Druckauf- oder ―abbau in der Hauptluftleitung realisiert.

Diese Werte sind jedoch nicht wirklich eindeutig für eine sichere "Zugtaufe". Beispielsweise ist nicht sichergestellt, daß bei zwei parallel im Gleis stehenden Zügen, die gleichzeitig getauft und aufgefüllt werden, eine Vermischung und Verwechslung der Wagen erfolgen könnte.

Der Erfindung liegt die Aufgabe zugrunde, ein Verfahren der gattungsgemäßen Art anzugeben und eine Anordnung der gattungsgemäßen Art zu schaffen, mittels denen in einfacher Weise eine eindeutige Zuordnung von Fahrzeugen ein und desselben Zuges bei einer Zugtaufe möglich ist.

Erfindungsgemäß wird diese Aufgabe durch ein Verfahren mit den im Anspruch 1 genannten Merkmalen gelöst. Dadurch, daß allen Fahrzeugen des zusammengestellten Zuges vor der Bestimmung der physischen Reihenfolge ein eindeutiges zuggebundenes, eine Pulsfolge als binäre Codierung und/oder als Morsezeichen aufweisendes Identifikationssignal übermittelt wird, und dieses Identifikationssignal während der Bestimmung der physischen Reihenfolge von den fahrzeugfesten Funkeinrichtungen zu bestätigen ist, läßt sich in einfacher Weise ausschließen, daß nicht zum zusammengestellten Zug gehörende Fahrzeuge versehentlich logisch durch eine Funkverbindung gekoppelt werden, da diese, nicht zum zusammengestellten Zug gehörenden Fahrzeuge nicht über das zuggebundene Identifikationssignal verfügen. Erst bei Übereinstimmung eines Vergleiches des den Fahrzeugen übermittelten Identifikationssignals mit einer während der Zugtaufe abgeforderten Kennung wird auf die physische Zuordnung des Fahrzeuges zu dem zu taufenden Zug erkannt, so daß auch eine logische Zuordnung dieses Fahrzeuges erfolgt. Fehlzuordnungen sind somit ausgeschlossen.

In bevorzugter Ausgestaltung der Erfindung ist vorgesehen, daß den Fahrzeugen das Identifikationssignal über eine Hauptluftleitung des Zuges pneumatisch übermittelt wird. Hierdurch wird es in einfacher Weise möglich, über die zum Aufbau eines Bremssystems des Zuges erforderliche Kopplung der einzelnen Fahrzeuge eine bestehende physische Verbindung zwischen den Fahrzeugen des zusammengestellten Zuges auszunutzen, um bei der Zugtaufe eine eindeutige Zuordnung zu erreichen. Insbesondere ist bevorzugt, daß das Identifikationssignal als Pulsfolge einer Druckluftschwankung über die Hauptleitung übertragen wird, und die Pulsfolge von fahrzeugfesten Aufnehmern erfaßt und den Funkeinrichtungen mitgeteilt wird. Hierdurch läßt sich in einfacher Weise ein sicheres, zuggebundenes Identifikationssignal generieren, das tatsächlich nur von den Fahrzeugen des zusammengestellten Zuges erfaßt und somit zum Vergleich mit der Kennung herangezogen werden kann. Durch eine derartige zuggebundene Bereitstellung der Identifikationssignale wird es möglich, bei jeder Neuzusammenstellung eines Zuges den Fahrzeugen ein individuelles zuggebundenes Identifikationssignal mitzuteilen, so daß, auch wenn die Fahrzeuge in zeitlichem Abstand unterschiedlichen Zügen zugeordnet werden, diese jeweils ein neu es, dem aktuellen Zug entsprechendes zuggebundenes Identifikationssignal erhalten.

In weiterer bevorzugter Ausgestaltung der Erfindung ist vorgesehen, daß die zuggebundenen Identifikationssignale von zwei autarken Aufnehmern je Fahrzeug erfaßt werden. Hierdurch wird eine Redundanz erhalten, die zur Erhöhung der Sicherheit der eindeutigen Zuordnung der Fahrzeuge beiträgt. Insbesondere, wenn die zwei Aufnehmer je Fahrzeug in Längserstreckung des Fahrzeuges beabstandet zueinander angeordnet sind, läßt sich neben der Redundanz zuzüglich eine Links/Rechts-Orientierung der Fahrzeuge im Zugverbund detektieren.

Erfindungsgemäß wird die Aufgabe weiterhin durch eine Anordnung mit den im Anspruch 9 genannten Merkmalen gelöst. Dadurch, daß jedes Fahrzeug wenigstens einen mit der Hauptluftleitung gekoppelten Drucksensor umfaßt, dessen Ausgang mit 5 den fahrzeugfesten Funkeinrichtungen verbunden ist, und einer der die Zugtaufe durchführenden Zentraleinheit zugeordneten Einrichtung zum Generieren eines Identifikationssignals, das über die Hauptluftleitung übertragbar und von den Drucksensoren empfangbar ist, läßt sich in einfacher Weise ohne großen technischen Aufwand ein zuggebundenes Identifikationssignal an alle Fahrzeuge eines zusammengestellten Zuges übermitteln. Alternativ dazu kann die Erfassung des Identifikationssignals auch über Strömungssensoren statt über Drucksensoren erfolgen. Die vor Initialisierung des funkbasierten Datenkommunikationssystems sowieso zur Schaffung des Bremssystems erfolgende pneumatische Kopplung der Fahrzeuge des Zuges kann somit in einfacher Weise den Einrichtungen zum Generieren beziehungsweise Empfangen der zuggebundenen Identifikationssignale zugeordnet werden. In die Hauptluftleitung integrierte Druck- oder Strömungsaufnehmer lassen sich einfach und robust aufbauen, so daß diese den relativ großen mechanischen Beanspruchungen bei einem Zugbetrieb störungsfrei standhalten. Eine über die Hauptluftleitung übertragene Druckluftänderung oder Luftströmung läßt sich somit in einfacher Weise detektieren und über die Sensoren in ein elektrisches Signal wandeln, das den fahrzeuggebundenen Funkeinrichtungen zur Verfügung gestellt wird.

Weitere bevorzugte Ausgestaltungen der Erfindung ergeben sich aus den übrigen, in den Unteransprüchen genannten Merkmalen.

Die Erfindung wird nachfolgend in einem Ausführungsbeispiel anhand der zugehörigen Zeichnungen näher erläutert. Es zeigen:
- Figur 1: schematisch die Konfiguration zweier Züge;
- Figur 2: schematisch die Konfiguration zweier Züge in einer weiteren Variante;
- Figur 3: den Signalverlauf eines Identifikationssignales in einer ersten Ausführungsvariante und
- Figur 4: den Signalverlauf eines Identifikationssignals in einer zweiten Ausführungsvariante.

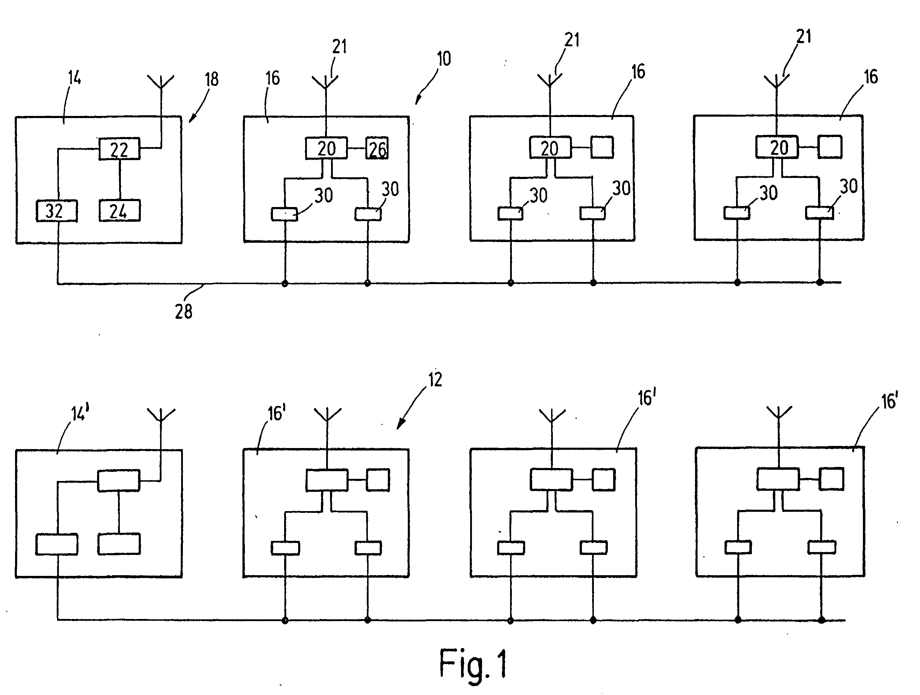

Figur 1 zeigt schematisch einen ersten Zug 10 und einen zweiten Zug 12. Die Züge 10 und 12 umfassen jeweils ein Triebfahrzeug 14 beziehungsweise 14' sowie wenigstens einen Wagen 16 beziehungsweise 16'. Gemäß den dargestellten Ausführungsbeispielen sind drei Wagen 16 beziehungsweise 16' vorgesehen. Nach weiteren, nicht dargestellten Ausführungsbeispielen können die Züge 10 und 12 mehr als ein Triebfahrzeug 14 beziehungsweise 14' und eine unterschiedliche Anzahl von Wagen 16 beziehungsweise 16' aufweisen. Nachfolgend werden nur die für die Erläuterung der Erfindung wesentlichen Bestandteile erläutert, wobei klar ist, daß innerhalb des Zuges 10 beziehungsweise 12 weitere Systemkomponenten vorgesehen sind, die für Betrieb, Steuerung, Überwachung der Züge notwendig sind.

Bei der Erläuterung des Ausführungsbeispieles wird davon ausgegangen, daß die Züge 10 und 12 zusammengestellt wurden, und für eine sichere Betriebsweise eine Bestimmung der physischen Reihenfolge der Fahrzeuge innerhalb der Züge 10 beziehungsweise 12 zur Initialisierung eines Datenkommunikationssystems durchgeführt werden soll. Der hierzu notwendige Aufbau der Anordnung und dessen Funktion wird anhand des Zuges 10 erläutert, wobei klar ist, daß bei der Zugtaufe des Zuges 12 vollkommen analog verfahren wird. Die Darstellung des Zuges 12 erfolgte, um die Vorteile des erfindungsgemäßen Verfahrens zu verdeutlichen.

Dem Zug 10 ist ein funkbasiertes Datenkommunikationssystem 18 zugeordnet, das aus einem Funkbus besteht, an den innerhalb der Wagen 16 fahrzeugfest angeordnete Funkeinrichtungen 20 gekoppelt sind. Die Funkeinrichtungen 20 sind mit hier angedeuteten Antenneneinrichtungen 21 versehen. Das Triebfahrzeug 14 besitzt einen Leitrechner 22, über den eine Initialisierung des Datenkommunikationssystems 18 erfolgt, und über den die Steuerung des Zuges 10 während des Betriebes durchführbar ist. Der Leitrechner 22 ist hierzu mit sogenannten stellwerterzeugenden Systemkomponenten 24 gekoppelt, während die Funkeinrichtungen 20 in dem Wagen 16 mit steilwertumsetzenden Systemkomponenten 26 gekoppelt sind. Auf Anzahl, Aufbau und Funktion der Systemkomponenten 24 und 26 soll im Rahmen der vorliegenden Beschreibung nicht näher eingegangen werden. Diese Systemkomponenten 24 und 26 dienen der gesamten Betriebsweise und Steuer- und Überwachungsfunktion des Zuges 10, beispielsweise Antrieb, Bremse oder dergleichen.

Neben einer nicht dargestellten mechanischen Kopplung der Fahrzeuge innerhalb des Zuges 10 (über Kupplungen) werden die einzelnen Fahrzeuge über eine Hauptluftleitung 28 pneumatisch gekoppelt. Die Hauptluftleitung 28 dient der Versorgung einer Bremsanlage des Zuges 10 mit Druckluft. Die Funktion und Aufbau einer derartigen Bremsanlage und einer Hauptluftleitung sind allgemein bekannt, so daß hierauf nicht näher eingegangen werden soll.

Die Wagen 16 besitzen jeweils zwei Drucksensoren 30, die beispielsweise als elektropneumatische Druckwandler ausgebildet sind. Die Drucksensoren 30 sind pneumatisch mit der Hauptluftleitung 28 gekoppelt und elektrisch mit den Funkeinrichtungen 20 verbunden. Die Drucksensoren 30 sind innerhalb
eines Wagens 16 derart angeordnet, daß diese in Längserstreckung des Wagens, das heißt in beziehungsweise entgegengesetzt der Fahrtrichtung, beabstandet zueinander angeordnet sind. Innerhalb des Triebfahrzeuges 14 ist eine Einrichtung 32 angeordnet, mittels der innerhalb der Hauptluftleitung 28 eine definierte Druckänderung generierbar ist. Die Einrichtung 32 ist beispielsweise als elektropneumatischer Wandler ausgebildet, der pneumatisch an die Hauptluftleitung 28 gekoppelt ist und elektrisch mit dem Leitrechner 22 verbunden ist.

Die in Figur 1 dargestellte Anordnung zeigt folgende Funktion:

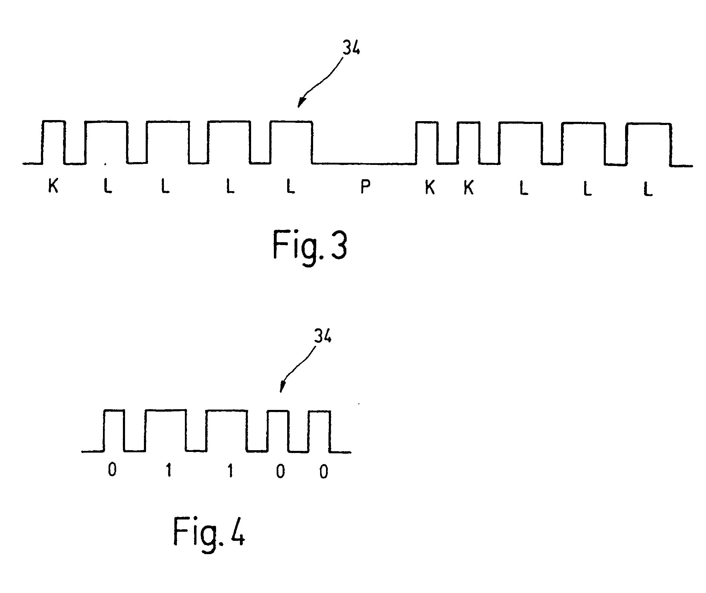

Nachdem der Zug 10 zusammengestellt ist, erfolgt eine mechanische und pneumatische Kopplung des Triebfahrzeuges 14 mit den Wagen 16. Dem Zug 10 wird dann ein eindeutiges Identifikationssignal 34 zugeordnet. Dieses Identifikationssignal 34 kann beispielsweise aus einer Zugnummer, einer den Standort des Zuges definierenden Nummer oder dergleichen gebildet sein. Dieses Identifikationssignal 34 wird von dem Leitrechner 22 codiert. Diese Codierung dient der Ansteuerung der Einrichtung 32, mittels der entsprechend der Codierung definierte Druckänderungen innerhalb der Hauptluftleitung 28 generierbar sind. Anhand eines einfachen Beispieles soll die Codierung in den Figuren 3 und 4 verdeutlicht werden. Hierbei wird davon ausgegangen, daß als Identifikationssignal 34 für den Zug 10 die Zahl "12" dienen soll. Selbstverständlich ist jedes andere analoge Beispiel möglich.

Gemäß dem in Figur 3 gezeigten Signalverlauf kann das Identifikationssignal 34 in eine Pulsfolge entsprechend dem Morsealphabet gewandelt werden. Das Identifikationssignal 34 wird hierbei in seine Ziffernfolge zerlegt und entsprechend codiert. Die Ziffer "1" wird durch eine Impulsfolge "Kurz-Lang-Lang-Lang-Lang" und die Ziffer "2" durch eine Impulsfolge "Kurz-Kurz-Lang-Lang-Lang" übertragen. Die einzelnen Ziffern sind durch eine Pause voneinander getrennt.

Gemäß der in Figur 4 gezeigten Codierung des Identifikationssignals 34 wird dieses als Binärzahl übertragen. Die Ziffer "12" wird hierbei durch die Binärzahl 01100 definiert, so daß sich die Pulsfolge "Kurz-Lang-Lang-Kurz-Kurz" ergibt.

Entsprechend der gewählten Codierung des Identifikationssignals 34 ergibt sich eine Druckluftänderung in der Hauptluftleitung, die durch die Einrichtung 32 erzeugt wird. Ausgehend von einem Ausgangsdruck P₀ kann hierbei entweder eine Druckanhebung oder Druckabsenkung entsprechend der codierten Pulsfolge erfolgen. Diese definierten Druckluftänderungen innerhalb der Hauptluftleitung 28 werden von den Drucksensoren 30 in den Wagen 16 erfaßt. Mittels der Drucksensoren 30 wird die Pulsfolge in ein elektrisches Signal rückgewandelt und den Funkeinrichtungen 20 mitgeteilt. Die Funkeinrichtungen 20 besitzen ein nicht näher dargestelltes Speicherelement, in dem das zuggebundene Identifikationssignal 34 gespeichert wird.

Bei der nachfolgenden Initialisierung des Datenkommunikationssystems 18 wird über den Leitrechner 22 zusätzlich zu der eigentlichen Datenübertragung bei der Zugtaufe das Identifikationssignal 34 als Kennung mit übertragen. Der erste Wagen 16 empfängt dieses Signal und vergleicht die Kennung mit dem gespeicherten Identifikationssignal 34. Bei Übereinstimmung meldet sich der Wagen 16 im Zug 10 an und erhält die erforderliche logische Adresse. Der Wagen 16 sucht dann den nächsten Wagen 16 im Zug 10, der wiederum die Kennung mit dem gespeicherten Identifikationssignal 34 vergleicht. Dieses Verfahren wird fortgeführt, bis sämtliche Wagen 16 des Zuges 10 sich angemeldet haben. Dadurch, daß vor Anmeldung der Wagen 16 im Zug 10 ein Vergleich der Kennung mit dem gespeicherten Identifikationssignal 34 erfolgt, wird vermieden, daß beispielsweise ein Wagen 16' des Zuges 12, der sich im Empfangsbereich des Funkbusses des Zuges 10 befindet, sich versehentlich im Zug 10 anmeldet. Dies ist nicht möglich, da innerhalb der Funkeinrichtungen 20' der Wagen 16' das Identifikationssignal 34 des Zuges 10 nicht zur Verfügung steht. Bei einer Zugtaufe des Zuges 12 wird dort ein eigenes Identifikationssignal den Wagen 16' übertragen.

Durch die Anordnung mehrerer, im gezeigten Beispiel von zwei Drucksensoren 30 pro Wagen 16 wird erreicht, daß diese entsprechend ihres Abstandes die über die Hauptluftleitung 28 gesendete Pulsfolge des Identifikationssignals 34 zeitversetzt empfangen. Aus diesem Zeitversatz kann ermittelt werden, ob der in Längserstreckung des Wagens 16 vorne oder hinten angeordnete Drucksensor 30 zuerst das Identifikationssignal 34 empfängt. Hieraus läßt sich eine Rechts/Links-Orientierung des Wagens 16 innerhalb des Zuges 10 ableiten. Ferner kann durch den zweifachen Empfang der Pulsfolge des Identifikationssignals 34 pro Wagen 16 dieses redundant verarbeitet werden. Somit läßt sich die Sicherheit der Zugtaufe erhöhen.

Insgesamt wird deutlich, daß mittels einfacher Codierung und Übertragung eines Identifikationssignals 34 über die Hauptluftleitung 28, die eine pneumatische Kupplung der Fahrzeuge innerhalb des Zuges 10 übernimmt, eine anschließende, mittels eines funkbasierten Datenkommunikationssystems durchgeführte Zugtaufe sicher und eindeutig realisierbar ist.

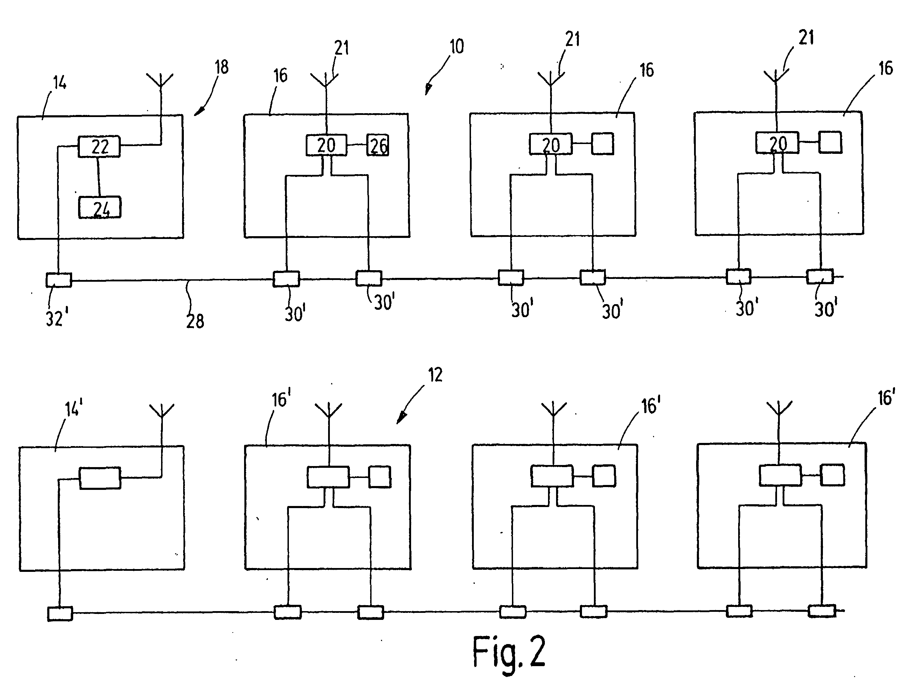

Figur 2 zeigt analog der Darstellung in Figur 1 schematisch die Züge 10 und 12. Gleiche Teile wie in Figur 1 sind mit gleichen Bezugszeichen versehen und nicht nochmals erläutert.

Bei dem Ausführungsbeispiel gemäß Figur 2 sind Strömungssensoren 30' vorgesehen, die anstelle der Drucksensoren 30 in die Hauptluftleitung 28 eingebunden sind. Ferner ist dem Triebfahrzeug 14 eine Einrichtung 32' zugeordnet, mittels der eine definierte Luftströmung innerhalb der Hauptluftleitung 28 generierbar ist. Mittels der Einrichtung 32' kann das Identifikationssignal 34 als definierte Strömungsänderung in die Hauptluftleitung 28 eingespeist werden, wobei diese definierte Strömungsänderung von den Strömungssensoren 30' erfaßbar ist. Die Codierung kann analog den definierten Druckänderungen entsprechend den in den Figuren 3 und 4 erläuterten Möglichkeiten erfolgen.

## Patentansprüche

1. Verfahren zum Bestimmen der physischen Reihenfolge von Fahrzeugen eines zusammengestellten Zuges, wobei von fahrzeugfesten Funkeinrichtungen auf Anforderungen eines Zugmasters Informationen in ein zuggebundenes funkbasiertes Datenkommunikationssystem gesendet werden, **dadurch gekennzeichnet, daß** allen Fahrzeugen (16) des zusammengestellten Zuges (10) vor der Bestimmung der physischen Reihenfolge ein eindeutiges zuggebundenes, eine Pulsfolge als binäre Codierung und/oder als Morsezeichen aufweisendes Identifikationssignal (34) übermittelt wird, und dieses Identifikationssignal (34) während der Bestimmung der physischen Reihenfolge von den fahrzeugfesten Funkeinrichtungen (20) zu bestätigen ist.

2. Verfahren nach Anspruch 1, **dadurch gekennzeichnet, daß** in den Fahrzeugen (16) das Identifikationssignal (34) über eine Hauptluftleitung (28) des Zuges (10) pneumatisch übermittelt wird.

3. Verfahren nach einem der vorhergehenden Ansprüche, **dadurch gekennzeichnet, daß** das Identifikationssignal (34) als Pulsfolge einer Druckluftänderung über die Hauptluftleitung (28) übertragen wird und die Pulsfolge von wenigstens einem fahrzeugfesten Aufnehmer (30) je Fahrzeug (16) erfaßt und den Funkeinrichtungen (20) mitgeteilt wird.

4. Verfahren nach Anspruch 1 oder 2, **dadurch gekennzeichnet daß** das Identifikationssignal (34) als Pulsfolge einer Luftströmung über die Hauptluftleitung (28) übertragen wird und die Pulsfolge von wenigstens einem fahrzeugfesten Aufnehmer (30') je Fahrzeug (16) erfaßt und den Funkeinrichtungen (20) mitgeteilt wird.

5. Verfahren nach einem der vorhergehenden Ansprüche, **dadurch gekennzeichnet, daß** die Identifikationssignale (34) von zwei autarken Aufnehmem (30, 30') je Fahrzeug (16) erfaßt werden.

6. Verfahren nach Anspruch 5, **dadurch gekennzeichnet, daß** die Identifikationssignale (34) in Längserstreckung des Fahrzeuges (16) beabstandet zueinander erfaßt werden.

7. Anordnung zur Bestimmung der physischen Reihenfolge von Fahrzeugen eines Zuges mit einem zuggebundenen funkbasierten Datenkommunikationssystem, wobei jedem Fahrzeug eine fahrzeugfeste Funkeinrichtung zur Übertragung von Informationen zugeordnet ist, mit wenigstens einer, eine Masterfunktion ausübenden Zentraleinheit, und mit einer, die Fahrzeuge des Zuges pneumatisch verbindenden Hauptluftleitung, **dadurch gekennzeichnet, daß** jedes Fahrzeug (16) wenigstens einen mit der Hauptluftleitung (28) gekoppelten Sensor (30. 30') umaßt, dessen Ausgang mit den fahrzeugfesten Funkeinrichtungen (20) verbunden ist, und einer der Zentraleinheit (22) zugeordneten Einrichtung (32) zum Generieren eines zuggebundenen, eine Pulsfolge als binäre Codierung und/oder als Morsezeichen aufweisendes Identifikationssignals (34), das über die Hauptluftleitung (28) übertragbar und von den Sensoren (30, 30') empfangbar ist.

8. Anordnung nach Anspruch 7, **dadurch gekennzeichnet, daß** jedes Fahrzeug (16) zwei mit der Hauptluftleitung (28) gekoppelte Sensoren (30 bzw. 30') aufweist.

9. Anordnung nach Anspruch 8, **dadurch gekennzeichnet, daß** die Sensoren (30 bzw. 30') in Längserstreckung des Fahrzeuges (16) beabstandet zueinander angeordnet sind.

10. Anordnung nach einem der vorhergehenden Ansprüche, **dadurch gekennzeichnet, daß** die Sensoren (30) Drucksensoren sind.

11. Anordnung nach Anspruch 7 bis 9, **dadurch gekennzeichnet, daß** die Sensoren (30') Strömungssensoren sind.

## Claims

1. A method for determining the physical sequence of the vehicles of a marshaled train, wherein information is transmitted into a train-bound wireless communication system by stationary radio devices of the individual vehicles upon the reception of a corresponding request from a train master,
**characterized in that**
a specific train-bound identification signal (34) containing a pulse sequence in the form of a binary coding and/or in the form of a Morse signal is transmitted to all vehicles (16) of the marshaled train (10) before the determination of the physical sequence, and **in that** this identification signal (34) needs to be acknowledged by the stationary radio devices (20) of the individual vehicles during the determination of the physical sequence.

2. The method according to Claim 1,
**characterized in that**
the identification signal (34) is pneumatically transmitted in the vehicles (16) via a main air line (28) of the train (10).

3. The method according to one of the preceding claims,
**characterized in that**
the identification signal (34) is transmitted via the main air line (28) in the form of a pulse sequence of an air pressure change, and **in that** the pulse sequence is detected by at least one stationary sensor (30) per vehicle (16) and signaled to the radio devices (20).

4. The method according to Claim 1 or 2,
**characterized in that**
the identification signal (34) is transmitted via the main air line (28) in the form of a pulse sequence of an air flow, and **in that** the pulse sequence is detected by at least one stationary sensor (30') per vehicle (16) and signaled to the radio devices (20).

5. The method according to one of the preceding claims,
**characterized in that**
the identification signals (34) are detected by two autarkic sensors (30, 30') per vehicle (16).

6. The method according to Claim 5,
**characterized in that**
the identification signals (34) are detected successively with a certain delay in the longitudinal direction of the vehicle (16).

7. An arranged for determining the physical sequence of the vehicles of a train, with a train-bound wireless data communication system, in which a stationary radio device for transmitting information is assigned to each vehicle, with at least one central unit that fulfills a master function, and with a main air line that pneumatically connects the vehicles of the train,
**characterized in that**
each vehicle (16) comprises at least one sensor (30, 30') that is coupled with the main air line (28) and the output of which is connected to the stationary radio device (20) of the vehicle, and **in that** a device (32) for generating a train-bound identification signal (34) containing a pulse sequence in the form of a binary coding and/or in the form of a Morse signal is assigned to the central unit (22), wherein said identification signal can be transmitted via the main air line (28) and detected by the sensors (30, 30').

8. The arrangement according to Claim 7,
**characterized in that**
each vehicle (16) comprises two sensors (30 and 30') that are coupled with the main air line (28).

9. The arrangement according to Claim 8,
**characterized in that**
the sensors (30 and 30') are spaced apart from one another in the longitudinal direction of the vehicle (16).

10. The arrangement according to one of the preceding claims,
**characterized in that**
the sensors (30) consist of pressure sensors.

11. The arrangement according to Claims 7-9,
**characterized in that**
the sensors (30') consist of flow sensors.

## Revendications

1. Procédé de définition de l'ordre physique des véhicules d'un train assemblé, des informations étant envoyées par des systèmes de radio fixes des véhicules sur demande d'un maître de train vers un système de communication de données lié au train et basé sur la radio,
**caractérisé en ce**
**qu'**est transmis à tous les véhicules (16) du train assemblé (10), avant la définition de l'ordre physique, un signal d'identification (34) clair, lié au train, présentant une suite d'impulsions sous forme de codage binaire et/ou de signes en morse, et que ce signal d'identification (34) doit être confirmé pendant la définition de l'ordre physique par les systèmes de radio fixes des véhicules (20).

2. Procédé selon la revendication 1,
**caractérisé en ce que**,
dans les véhicules (16), le signal d'identification (34) est transmis par système pneumatique par une conduite d'air principale (28) du train (10).

3. Procédé selon l'une quelconque des revendications précédentes,
**caractérisé en ce que**
le signal d'identification (34) est transmis sous forme de suite d'impulsions d'une modification de l'air comprimé par la conduite d'air principale (28) et que la suite de pulsations est enregistrée par au moins un enregistreur fixe de véhicule (30) par véhicule (16) et communiqué aux systèmes de radio (20).

4. Procédé selon la revendication 1 ou 2,
**caractérisé en ce que**
le signal d'identification (34) est transmis sous forme de suite de pulsations d'un flux d'air par la conduite d'air principale (28) et que la suite de pulsations est enregistrée par au moins un enregistreur fixe de véhicule (30') par véhicule (16) et communiquée aux systèmes de radio (20).

5. Procédé selon l'une quelconque des revendications précédentes,
**caractérisé en ce que**
les signaux d'identification (34) sont enregistrés par deux enregistreurs autonomes (30, 30') par véhicule (16).

6. Procédé selon la revendication 5,
**caractérisé en ce que**
les signaux d'identification (34) sont enregistrés à distance les uns des autres dans l'extension longitudinale du véhicule (16).

7. Dispositif pour la définition de l'ordre physique des véhicules d'un train, comportant un système de communication de données lié au train et basé sur la radio, étant associé à chaque véhicule un dispositif radio fixe de véhicule pour la transmission des informations, au moins une unité centrale assurant une fonction maîtresse et une conduite d'air principale reliant par système pneumatique les véhicules du train,
**caractérisé en ce que**
chaque véhicule (16) comprend au moins un capteur (30, 30') couplé à la conduite d'air principale (28), dont la sortie est reliée aux systèmes de radio fixes des véhicules (20), et un dispositif (32) associé à l'unité centrale (22) et servant à générer un signal d'identification (34) lié au train, présentant une suite de pulsations sous forme de codage binaire et/ou de signes en morse et qui peut être transmis par la conduite d'air principale (28) et reçu par les capteurs (30, 30').

8. Dispositif selon la revendication 7,
**caractérisé en ce que**
chaque véhicule (16) présente deux capteurs (30 ou 30') couplés à la conduite d'air principale (28).

9. Dispositif selon la revendication 8,
**caractérisée en ce que**
les capteurs (30 ou 30') sont disposés à distance l'un de l'autre dans l'extension longitudinale du véhicule (16).

10. Dispositif selon l'une quelconque des revendications précédentes,
**caractérisée en ce que**
les capteurs (30) sont des capteurs de pression.

11. Dispositif selon les revendications 7 à 9,
**caractérisée en ce que**
les capteurs (30') sont des capteurs de flux.
